# EUROPÄISCHE PATENTSCHRIFT

(11) **EP 1 785 460 B1**
(45) Veröffentlichungstag und Bekanntmachung des Hinweises auf die Patenterteilung: **25.03.2009**
(21) Anmeldenummer: 06017338.2
(22) Anmeldetag: 21.08.2006
(51) Int. Cl.: C09J 7/02, E04B 1/68, E06B 1/62

(54) **Montageband mit Perforation und Dehnungsreserve**
Self-adhesive tape with perforation and projecting-edge
Ruban auto-adhésif ayant perforation et bord saillant

(30) Priorität: 14.11.2005 DE 102005054236
(43) Veröffentlichungstag der Anmeldung: 16.05.2007
(73) Patentinhaber: Silu Verwaltung AG, 6045 Meggen (CH)
(72) Erfinder: Sieber, Marco, 6048 Horw (CH); Sieber, Reto, 6019 Sigigen (CH)
(74) Vertreter: Altenburg, Udo

(56) Entgegenhaltungen:
- DE-B3- 10 337 880

## Beschreibung

Die Erfindung betrifft ein selbstklebendes Band zum Verschließen, Abdichten und Verkleben von Fugen, insbesondere im Hausbau, und insbesondere von Fugen in Ecken und Kanten, mit einer Trägerschicht an der Bandoberseite, einer Haftkleberbeschichtung zumindest eines Teils der Trägerschicht an der Bandunterseite und mit einer abziehbaren Abdeckfolie der Haftkleberbeschichtung an der Bandunterseite.

Allgemein finden Klebebänder z.B. Anwendung, wenn im Hausbau verschiedene Bauelemente, wie Türen oder Fenster, in eine Wandöffnung eingesetzt werden und die dabei zwischen den Bauelementen und der entsprechenden Wandöffnung entstehende Fuge verschlossen wird, was speziell beim Einbau solcher Bauelemente in Gebäudeaußenwände erfolgen muss, um eine entsprechende Dichtwirkung zu erzielen.

Ein generelles Problem solcher selbstklebender Bänder ist, in schwer zugänglichen Bereichen bei möglichst unkomplizierter Anwendung dennoch eine gute Abdichtwirkung durch korrekte Anbringung solcher Bänder zu erzielen, um ein möglichst luft- bzw. feuchtigkeitsdichtes Verschließen der Fugen zu erreichen. Insbesondere die Breite der zu verschließenden Fugen kann dabei je nach Einbausituation auf einer Baustelle stark variieren, so dass eine Vielzahl von Bändern mit unterschiedlicher Breite vorhanden sein müsste, um immer eine geeignete Bandbreite (eventuell sogar abschnittsweise z.B. bei einem einzubauenden Fenster oder ähnlichem wechselnd, was die Dichtwirkung verschlechtern kann) verwenden zu können. Auch die sichere Befestigung des Bandes zur Wand hin, d.h. zum Mauerwerk, muss sichergestellt sein, um eine zufrieden stellende Dichtwirkung unter allen Umständen sicher zu stellen. Es darf dabei nicht geschehen, dass durch eine eventuell zu geringe zur Verfügung stehende Breite des Bandes ein perforierter Einputzbereich unverputzt bleibt und somit dann freiliegende Teile der Perforation die Abdichtwirkung verhindern.

Die deutsche Offenlegungsschrift DE 101 35 799 A1 derselben Anmelderin zeigt ein Montageklebeband zur verbesserten Fugenabdichtung mit einem geeigneten Montageband-Dispenser, wobei das entsprechende Montageband auf der Bandunterseite eine auf einer Trägerschicht auf einer Bandoberseite vorgesehene Klebeschicht aufweist, welche mit einer abziehbaren Deckfolie an der Bandunterseite versehen ist. Die Deckfolie weist in Längsrichtung des Bandes verlaufend einen Schlitz auf und das Band ist entlang dieses Schlitzes in Querrichtung einmal so auf sich selbst gefaltet, dass mindestens ein Teil der Deckfolie außen, d.h. an der Bandoberseite liegt. Ferner weist dieses Band mindestens einen seitlichen Längsabschnitt auf, welcher perforiert ist. Um beim Transport und der Anwendung das auf Grund der Deckfolienabdeckung relativ leicht in sich verrutschende Montageklebeband in aufgerollter Form sicher handhaben zu können, ist ein spezieller Montageband-Dispenser zur Aufnahme und Ausgabe des Montageklebebandes vorgesehen. Die einzelne Umfaltung des Montageklebebandes entlang eines Schlitzes der Deckfolie erlaubt es, dass das bekannte Montageklebeband auch in schwer zugänglichen Bereichen effektiv verklebbar ist. Durch die einfache Umfaltung entlang eines Schlitzes ist zwar eine zuverlässige Verarbeitbarkeit gegeben, jedoch muss bei der Verarbeitung immer zunächst entlang des Schlitzes der Faltungskante die Abdeckfolie vor der eigentlichen Anbringung des genannten Montageklebebandes entfernt werden. Auch kann es in bestimmten Anwendungsfällen, insbesondere bei sehr beengten räumlichen Verhältnissen, wünschenswert sein, die Handhabbarkeit noch weiter zu optimieren.

Das Patent DE 103 37 880 derselben Inhaberin beschreibt ein Montageband, welches zur Fugenabdichtung, insbesondere im Hausbau, dient und zumindest einen entlang einer ersten Faltungskante umgefalteten ersten Faltungsabschnitt aufweist, wobei eine Abdeckfolie einer Haftkleberbeschichtung zumindest einen ersten Schlitz aufweist, der an einer anderen Stelle als die erste Faltungskante verläuft. Das Band kann auch einen zweiten Faltungsabschnitt aufweisen, der entlang einer zweiten Faltungskante umgefaltet ist. Ein Perforationsbereich des Bandes kann vorgesehen sein.

Das Gebrauchsmuster DE 201 21 253 U1 beschreibt ein mehrkomponentiges und aus mehreren Abschnitten bestehendes bandartiges Verbindungselement zwischen einem Rahmenbauteil, z.B. einem Fensterrahmen, und einem Mauerwerk, mit einer Klebeverbindbarkeit zu dem Rahmenbauteil hin, wobei die Verbindung mit dem im Einbauzustand das Rahmenbauteil umgebenden und daran angrenzenden Mauerwerk über einen Streifen aus Dauerklebemasse erzielt wird. Eine auslösbare Verlängerungsreserve ist vorgesehen um eventuelle Ausdehnungen im Mauerwerk und/oder dem Rahmenbauteil zu kompensieren.

Der Erfindung liegt die Aufgabe zu Grunde, ein selbstklebendes Band zum Verschließen, Abdichten und Verkleben von Fugen, insbesondere im Hausbau, und insbesondere von Fugen in Ecken und Kanten, vorzusehen, welches die Nachteile des Standes der Technik überwindet und insbesondere trotz einfacher und somit kostengünstiger Gestaltung eine optimale Dichtwirkung bei gleichzeitig weiter verbesserter Handhabbarkeit, insbesondere unter räumlich schwierigen bzw. beengten Verhältnissen und bei variierenden Breiten der abzudichtenden Fugen, vorsieht.

Diese Aufgabe mit einem selbstklebenden Band gemäß Anspruch 1 gelöst.

Vorteilhafte Ausgestaltungen und Weiterbildungen sind in den Unteransprüchen definiert.

Das erfindungsgemäße selbstklebende Band zum Verschließen, Abdichten und Verkleben von Fugen, insbesondere im Hausbau z.B. zwischen einem Mauerwerk und einem Rahmenbauteil, wie etwa einem Fensterrahmen, oder auch z.B. zwischen Trockenbauwänden oder aneinander stoßenden Mauern, und insbesondere von Fugen in Ecken und Kanten, welche besonders schwer erreichbar sind, weist eine Trägerschicht an der Bandoberseite, eine Haftkleberbeschichtung zumindest eines Teils der Trägerschicht an der Bandunterseite und eine abziehbare Abdeckfolie der Haftkleberbeschichtung an der Bandunterseite auf. Die Bandunterseite ist dabei die Seite, welche im Gebrauch des erfindungsgemäßen Bandes im Einbauzustand üblicherweise z.B. an dem Rahmenbauteil angebracht werden kann. Erfindungsgemäß weist das Band zumindest in einem Randbereich zumindest einen Perforationsbereich auf, wo zumindest die Trägerschicht perforiert ist, und das Band weist zumindest eine Dehnungsreserve (D) auf. Es können auch mehrere Dehnungsreserven (D) vorgesehen sein, bevorzugt über- und/oder nebeneinander. Die Dehnungsreserve (D) ist bei Bedarf im Anwendungsfall zumindest abschnittsweise oder komplett ausziehbar und/oder ausklappbar. Der zumindest eine Perforationsbereich stellt erfindungsgemäß einen Einputzbereich dar bzw. ist ein Einputzbereich, welcher zur dauerhaften Verbindung mit dem Mauerwerk bzw. mit dem Mauerputz überputzbar ist. Die Perforationsöffnungen im Perforationsbereich sollen daher zu diesem Zweck ausreichend groß sein, damit sich entsprechende Vertiefungen ergeben, in welche gegebenenfalls Mauerputz zumindest teilweise eindringen kann. Dieser Einputzbereich kann somit nicht Wasser- oder Winddicht ausgebildet sein.

Gemäß der Erfindung weist das Band zumindest einen Perforationsbereich mit Perforationsöffnungen auf, deren durchschnittlicher Durchmesser bevorzugt mindestens 3 mm beträgt. Somit kann beispielsweise sichergestellt werden, dass der zumindest eine Perforationsbereich des Bandes überputzbar ist, wodurch sich eine besonders gute Verankerung ergibt, ohne die Abdichtwirkung des Bandes zu gefährden. Der zumindest eine Perforationsbereich ist dabei zumindest in einem Randbereich des Bandes ausgestaltet, es ist jedoch auch möglich, beide Randbereiche des Bandes mit einem entsprechenden Perforationsbereich zu versehen. Insbesondere können die entsprechenden Randbereiche, welche als Perforationsbereiche ausgebildet sein können, auch einem entsprechenden ersten oder zweiten Faltabschnitt des Bandes entsprechen. Zumindest der Mittelstreifen des Bandes, welcher vorzugsweise nicht perforiert sein soll, sollte je nach Anwendungsfall jedoch breiter sein als die maximale Breite der abzudichtenden Fuge, um eine optimale Abdichtwirkung sicherzustellen. Die optimale Abdichtwirkung wird erfindungsgemäß durch das Vorsehen der Dehnungsreserve (D) unter allen Einbaubedingungen, also auch bei stark variierenden Breiten der abzudichtenden Fugen, ermöglicht. Ein Ausziehen und/oder Ausklappen der Dehnungsreserve (D) gestattet die Anpassung an die Fugenbreite, ohne dass die Notwendigkeit besteht, verschiedene Bänder mit verschiedenen Breiten vorhalten zu müssen und solche Bänder gegebenenfalls abschnittsweise in aufwändigen Arbeitsschritten kombiniert anbringen zu müssen, was auch nicht in jedem Fall eine optimale Dichtwirkung ergeben wird. Die durch die Dehnungsreserve (D) vorgesehene Flexibilität und Anpassbarkeit des erfindungsgemäßen Bandes stellt auch und gerade in Kombination mit dem erfindungsgemäßen Perforationsbereich sicher, dass dieser Perforationsbereich immer die sichere Verbindung zum Mauerwerk sicherstellen kann und nicht bei größeren Breiten der abzudichtenden Fugen nur ein Teil des Perforationsbereichs im Einbauzustand mit dem Mauerwerk verbunden ist. Es wird auch die Dichtwirkung verbessert, da so immer erfindungsgemäß sichergestellt werden kann, dass durch den Perforationsbereich keine Undichtheit im Bereich der Breite der abzudichtenden Fugen auftreten kann, da der entsprechende Perforationsbereich ja immer komplett und sicher mit dem Mauerwerk verbunden werden kann, da die Dehnungsreserve (D) die Anpassung an die Fugenbreite ermöglicht. Dadurch, dass der perforierte Längsabschnitt des erfindungsgemäßen Bandes sich zumindest an einem Randbereich des Bandes befindet und der Mittelstreifen bevorzugt unperforiert bleibt, wird verhindert, dass die Perforationsöffnungen zu Undichtheiten führen, wenn die abzudichtende Fuge mit dem entsprechend gestalteten selbstklebenden Band abgedeckt wird. Die Dehnungsreserve (D) gestattet, wie gesagt, eine einfache Anpassung des erfindungsgemäßen Bandes an unterschiedliche Breiten der abzudichtenden Fugen.

Bevorzugt gehen die Perforationsöffnungen durch die Trägerschicht, die Haftklebeberbeschichtung und die abziehbare Abdeckfolie, d.h. nach einer vorteilhaften Ausgestaltung der Erfindung sind die Trägerschicht, die Haftkleberbeschichtung und die abziehbare Abdeckfolie mit entsprechend durchgehenden Perforationsöffnungen perforiert. Solche Perforationsöffnungen sind kostengünstig durch entsprechende Ausstanzungen besonders einfach herstellbar, was zu günstigen Herstellungskosten führt. Generell verhindert die Abdeckfolie bzw. die Trägerschicht dabei, dass ein Perforationswerkzeug mit der Kleberschicht des selbstklebenden Bandes in Berührung kommt. Es ist jedoch generell auch möglich, dass des Klebebandes mit Perforationsöffnungen in dem Bereich versehen ist, welcher nicht mit der Abdeckfolie abgedeckt ist.

Bevorzugt können die Perforationsöffnungen im Wesentlichen rund, eckig oder oval ausgebildet sein.

Bevorzugt ist die Dehnungsreserve (D) in Querrichtung des Bandes vom Perforationsbereich beabstandet. Dadurch wird die Verankerung (insbesondere durch das dadurch besonders einfach vorzunehmende Überputzen) des erfindungsgemäßen Bandes am Mauerwerk im Bereich des Perforationsbereichs besonders sichergestellt.

Besonders bevorzugt ist die Dehnungsreserve (D) in Querrichtung des Bandes gesehen im Wesentlichen mittig angeordnet (Anspruch 2).

Die Dehnungsreserve (D) ist bevorzugt zumindest eine Z-Faltung des Bandes, bevorzugter eine Plisseefaltung des Bandes (Anspruch 3). Auch mehrfache Z-Faltungen sind möglich.

Gemäß einer bevorzugten Ausführungsform des erfindungsgemäßen Bandes kann eine (weitere, zweite) Haftkleberbeschichtung zumindest eines Teils der Trägerschicht an der Bandoberseite vorgesehen sein, bevorzugt mit einer abziehbaren Abdeckfolie dieser Haftkleberbeschichtung an der Bandoberseite (Anspruch 7). Besonders bevorzugt ist die (weitere, zweite) Haftkleberbeschichtung zumindest eines Teils der Trägerschicht an der Bandoberseite im Perforationsbereich vorgesehen (Anspruch 8). Die Verarbeitbarkeit des solchermaßen bevorzugt ausgebildeten erfindungsgemäßen Bandes kann so je nach Anwendungsfall weiter verbessert werden.

Bevorzugt gehen die Perforationsöffnungen durch die Trägerschicht, die Haftkleberbeschichtung zumindest eines Teils der Trägerschicht an der Bandoberseite und die abziehbare Abdeckfolie (vgl. Anspruch 9).

Gemäß einer bevorzugten Ausführungsform des erfindungsgemäßen Bandes ist zumindest ein Mittenabschnitt des Bandes nichtklebend ausgebildet, bevorzugter ohne die Haftkleberbeschichtung und/oder die weitere, zweite Haftkleberbeschichtung (Anspruch 10). Es kann auch je nach Anwendungsfall der zumindest eine Perforationsbereich (falls gewünscht auch in Kombination mit dem Mittenabschnitt) nichtklebend ausgebildet sein.

Falls die Haftkleberbeschichtung an der Bandunterseite und/oder die weitere, zweite Haftkleberbeschichtung an der Bandoberseite des erfindungsgemäßen Bandes gemäß der bevorzugten Ausführungsform einen nichtklebenden ,bevorzugt im wesentlichen mittig angeordneten, Mittelstreifen aufweist, so erleichtert dies besonders das Verkleben von Fugen zwischen zwei rechtwinklig aufeinanderstoßenden Bauelementen, da ein schiefes Verkleben mit Faltenwurf gerade im Stoßbereich dieser Bauelemente dadurch auf einfache Weise verhindert wird. Die Abdichtwirkung bleibt dabei in vollem Umfang erhalten, da die beiden Randbereiche des Bandes entsprechend verklebt werden können.

Gemäß einer weiteren bevorzugten Ausführungsform des erfindungsgemäßen Bandes ist zumindest ein erster Faltabschnitt des Bandes in Querrichtung entlang einer in Längsrichtung des Bandes verlaufenden ersten Faltungskante umgefaltet ist, wobei bevorzugt die Abdeckfolie zumindest einen ersten Schlitz aufweist, wobei bevorzugter die erste Faltungskante an einer anderen Stelle als der erste Schlitz verläuft (Anspruch 11).

Dabei ist bevorzugt der erste Faltabschnitt der zumindest eine Perforationsbereich oder der erste Faltabschnitt ist der dem zumindest einen Perforationsbereich gegenüberliegende Abschnitt (Ansprüche 12 und 13).

Durch die erfindungsgemäß bevorzugte Kombination einer Umfaltung des Bandes entlang einer ersten Faltungskante und einem ersten Schlitz, welcher an einer anderen Stelle als die erste Faltungskante verläuft, ergibt sich unter bestimmten Bedingungen eine weiter erbesserte Verarbeitbarkeit des Bandes. Durch die Vorfaltung kann einerseits die Anbringung in Ecken und an Kanten vereinfacht werden, während die Schlitzung die Möglichkeit bietet, abschnittsweise die Abdeckfolie von der Haftkleberbeschichtung zu entfernen und das Band an einem solchen Klebeabschnitt beispielsweise mit einem abzudichtenden Fensterrahmen zu verkleben. Dadurch, dass Schlitzung und Faltungskante nicht zusammenfallen, ergibt sich der Vorteil, dass nur der festzuklebende Bereich des erfindungsgemäßen Bandes von einem entsprechenden Abschnitt der Abdeckfolie entfernt werden muss, während die Faltungskante beabstandet von dem Verklebeabschnitt verläuft. Dies bietet Vorteile besonders dort, wo Einbauten über Eck vorzunehmen sind und dieses Eck an einer anderen Stelle verläuft als der Bereich des Bauelements, an dem das Band verklebt werden soll. Unter solchen speziellen geometrischen Bedingungen bietet das entsprechende erfindungsgemäß gestaltete Selbstklebeband somit den Vorteil einer weiter verbesserten Verarbeitbarkeit, wodurch auch die Sicherheit der Anbringung und somit die Dichtwirkung unter allen Umständen gewährleistet ist.

Ein erfindungsgemäß bevorzugtes Band kann beispielsweise im Trockenausbau und/oder im Massivbau Verwendung finden. Insbesondere an räumlich schwer zugänglichen Stellen, wie 90°-Ecken, z.B. zwischen zwei aufeinander stoßenden Trockenausbauwänden, oder auch im Fensterbereich, wo das erfindungsgemäße Band möglichst genau an dem Fensterrahmen verklebbar ist, wird so das Risiko vermieden, dass beim späteren Verputzungsvorgang das Band durch einen Schlag der Verputzerkelle durchtrennt wird und somit dessen Luftdichtheit verloren geht. Die Vorfaltung erspart dem Anwender dabei viel Zeit, insbesondere wenn größere Fensterflächen mit mehreren eingesetzten Fensterrahmen bei einem Hausneubau in die Außenwände einzusetzen sind. Ansonsten müssten die entsprechende Faltung von Hand erfolgen, dies ist erfindungsgemäß nicht erforderlich. Setzt man das erfindungsgemäße Klebeband im Holzbau ein, so reicht es dort, dass aufgrund der auftretenden schmaleren Fugenbreite zwischen aneinander grenzenden Bauelementen, nur einzelne Abschnitte bzw. Randabschnitte des Dichtbandes zu verkleben, so dass durch entsprechende erfindungsgemäße Anordnung von einer geeigneten Schlitzung bzw. von geeigneten Schlitzungen eine sehr präzise und rasche Verarbeitbarkeit des erfindungsgemäßen Bandes ermöglicht wird.

Bevorzugt ist eine Ausführungsform der Erfindung, bei welcher das Band einen zweiten Faltungsabschnitt aufweist, welcher in Querrichtung entlang einer in Längsrichtung des Bandes verlaufenden zweiten Faltungskante umgefaltet ist (Anspruch 14). Durch diesen zweiten Faltungsabschnitt ist es beispielsweise möglich, im Rahmen einer Anwendung zwischen mehreren U-Profilen ein entsprechend gestaltetes Selbstklebeband auf einfache Art und Weise zu verwenden.

Bevorzugt kann die Abdeckfolie des erfindungsgemäßen Bandes zumindest einen zweiten Schlitz in Längsrichtung des Bandes aufweisen (Anspruch 15). Somit ergibt sich zumindest eine weitere Möglichkeit, die Abdeckfolie entsprechend abschnittsweise von der Bandunterseite bzw. von der Haftkleberbeschichtung an der Bandunterseite zu entfernen. Es bietet sich somit die Möglichkeit, zwei Haftabschnitte vorzusehen, wohingegen ein Abschnitt des vorteilhaft gestalteten erfindungsgemäßen Bandes mit der Abdeckfolie abgedeckt bleibt, beispielsweise ein Mittelbereich, welcher zwischen dem Bauelement und der eigentlichen Wand bzw. dem Mauerwerk liegt.

Gemäß einer weiteren bevorzugten Ausführungsform der Erfindung fällt die zweite Faltungskante mit dem zweiten Schlitz der Abdeckfolie zusammen (Anspruch 16). Damit ergibt sich die Möglichkeit, vom zweiten Faltabschnitt die Abdeckfolie der Haftkleberbeschichtung abzuziehen und das entsprechende Montageband im Bereich des zweiten Faltabschnitts zu verkleben.

Gemäß einer weiteren bevorzugten Ausführungsform ist es jedoch auch möglich, dass die zweite Faltungskante nicht mit dem ersten Schlitz und/oder dem zweiten Schlitz der Abdeckfolie zusammenfällt (Anspruch 17). Somit bietet sich eine flexible Gestaltungsmöglichkeit, bei welcher nicht zwingend die Abdeckfolie entlang des ersten Schlitzes und/oder entlang des zweiten Schlitzes von dem gesamten zweiten Faltungsabschnitt entfernt werden muss. Eine individuelle Anpassung an unterschiedliche Gegebenheiten, wobei insbesondere auch nur ein Teil des zweiten Faltungsabschnitts durch eine entsprechend angebrachte Schlitzung erlaubt, dort die Abdeckfolie abzuziehen, ist somit möglich.

Entsprechendes gilt für die Ausführungsform der Erfindung, bei welcher bevorzugt die erste Faltungskante nicht mit dem zweiten Schlitz der Abdeckfolie zusammenfällt (Anspruch 18).

Nicht zusammenfallende Faltungskante(n) und Schlitz(e) können bevorzugt einen Abstand voneinander zum jeweiligen Nachbarn im Bereich von 1 mm bis 25 cm aufweisen.

Gemäß einer bevorzugten Ausführungsform der Erfindung steht ein Randabschnitt der Abdeckfolie über die erste Faltungskante und/oder die zweite Faltungskante vor (Anspruch 19). Auf diese Weise ergibt/ergeben sich ein bzw. zwei Angreifabschnitt(e), welche(r) die Entfernung der Abdeckfolie auf einfache Art und Weise durch Angreifen am genannten Randabschnitt ermöglicht/ermöglichen. Dies erleichtert die Handhabbarkeit der erfindungsgemäßen Selbstklebefolie noch zusätzlich. Der Abschnitt/die Abschnitte kann/können bevorzugt eine Breite im Bereich von 1 mm bis 1 cm aufweisen.

Je nach individueller Anwendungssituation können unterschiedliche Anordnungen der Faltabschnitte für eine Verarbeitbarkeit besonders vorteilhaft sein.

Gemäß einer bevorzugten Ausführungsform der Erfindung können der erste Faltabschnitt und der zweite Faltabschnitt jeweils gegenüber liegende Randabschnitte des erfindungsgemäßen Bandes sein, es ist jedoch auch möglich, dass gemäß einer weiteren bevorzugten Ausführungsform der Erfindung der erste Faltabschnitt und der zweite Faltabschnitt in Querrichtung des Bandes gesehen aneinander angrenzen. Auch können der erste Faltabschnitt und der zweite Faltabschnitt gemäß einer weiteren bevorzugten Ausführungsform im umgefalteten Zustand des Bandes zumindest teilweise aufeinander liegen (Ansprüche 20 bis 22).

Gemäß einer weiteren bevorzugten Ausführungsform der Erfindung kann im Bereich des ersten Faltabschnitts und/oder im Bereich des zweiten Faltabschnitts Bandunterseite auf Bandunterseite aufliegen, es ist jedoch gemäß einer weiteren bevorzugten Ausführungsform auch möglich, dass im Bereich des ersten Faltabschnitts und/oder im Bereich des zweiten Faltabschnitts Bandoberseite auf Bandoberseite aufeinander liegt (Ansprüche 23 und 24).

Besonders bevorzugt ist eine Ausführungsform der Erfindung, bei welcher mindestens ein Teil der Haftkleberbeschichtung nicht mit der Abdeckfolie abgedeckt ist (Anspruch 25). Entlang des mit der Abdeckfolie nicht abgedeckten Teils der Haftkleberbeschichtung des erfindungsgemäßen Bandes muss dort die Abdeckfolie während des Verlegevorgangs nicht erst mühsam entfernt werden, wodurch sich eine raschere Verarbeitbarkeit des erfindungsgemäßen Bandes ergibt. Auch wird dadurch verhindert, dass eventuell durch das sonst erforderliche Abziehen der Folie Verwerfungen und Falten im angeklebten Band auftreten. Auch erfordert ein solches erfindungsgemäß gestaltetes Band keinen zusätzlichen Montageband-Dispenser zur Aufnahme und Ausgabe des Bandes, da sich im gefalteten bzw. aufgerollten Zustand das erfindungsgemäße Band gemäß dieser bevorzugten Ausführungsform aufgrund seiner teilweise von der Abdeckfolie frei bleibenden Haftkleberbeschichtung nicht in sich verschieben wird. Das Band ist somit besonders einfach und zuverlässig verwendbar. Auch kann das Band somit ohne besonderen Verpackungsaufwand und Schutzaufwand durch den Verarbeiter zu den entsprechenden Anwendungsorten bzw. Baustellen transportiert werden.

Gemäß einer bevorzugten Ausführungsform der Erfindung ist die Haftkleberbeschichtung des Bandes zumindest im Bereich des ersten Faltabschnitts und/oder im Bereich des zweiten Faltabschnitts nicht mit der Abdeckfolie abgedeckt (Anspruch 26). Das heißt, der umgefaltete Bereich bzw. die umgefalteten Bereiche des erfindungsgemäßen Bandes trägt/tragen bevorzugt keine Abdeckfolie. Somit kann/können diese(r) Bereich(e) einfach unter beengten räumlichen Verhältnissen, beispielsweise in Kanten oder U-Profilen, ohne weitere Hilfsmittel und Arbeitsschritte, wie beispielsweise Abziehen der Abdeckfolie oder mühsames Umfalten, z.B. direkt von der Rolle abgerollt und angerieben werden, wodurch sich eine zuverlässige Abdichtwirkung bei weiter vereinfachter Verarbeitbarkeit ergibt. Diese einfache Form der Verarbeitung spart bis zur Hälfte der Arbeitszeit im Vergleich zur Verwendung von Bändern des bisherigen Standes der Technik.

Bevorzugt kann die jeweilige Breite des ersten und/oder zweiten Faltabschnitts oder die Breite der Faltabschnitte schmaler sein als die Breite des nicht umgefalteten Bandbereichs. Bevorzugt kann die jeweilige Breite des ersten und/oder zweiten Faltabschnitts oder die Breite der Faltabschnitte auch eine gleiche oder im wesentlichen gleiche Breite aufweisen wie die Breite des nicht umgefalteten Bandbereichs. Bevorzugt kann die jeweilige Breite des ersten und/oder zweiten Faltabschnitts oder die Breite der Faltabschnitte auch eine größere Breite aufweisen wie die Breite des nicht umgefalteten Bandbereichs. Die jeweilige Breite des ersten und/oder zweiten Faltabschnitts oder die Breite der Faltabschnitte kann bevorzugt mindestens 3 mm, bevorzugter mindestens 8 mm, noch bevorzugter mindestens 12 mm betragen und/oder kann weiter bevorzugt der Breite des nicht umgefalteten Bandbereichs entsprechen und/oder kann noch weiter bevorzugt größer sein als die Breite des nicht umgefalteten Bandbereichs.

Um eine sichere Haftung des erfindungsgemäßen selbstklebenden Bandes auf unterschiedlichsten Materialien auch unter widrigen Witterungseinflüssen (Kälte, Feuchtigkeit) zu gewährleisten, und um unter allen Umständen eine möglichst zuverlässige Dichtwirkung des erfindungsgemäßen selbstklebenden Bandes zu erzielen, besteht die Trägerschicht gemäß einer bevorzugten Ausführungsform aus einem Material aus der Gruppe Papier, Kunststoff, Gewebe, Vlies oder einer Kombination zumindest zweier dieser Materialien, und/oder die Haftkleberbeschichtung an der Bandunterseite und/oder gegebenenfalls die Haftkleberbeschichtung an der Bandoberseite besteht bevorzugt aus zumindest einem Material der Gruppe selbstklebender Acrylatkleber, Kautschukkleber, Butylkleber, Hotmelt oder einer Kombination zumindest zweier dieser Kleber (Anspruch 27).

Allgemein müssen Klebermassen (wie z.B. in DE 201 21 253 U1 beschrieben) in genügender Dicke/Masse aufgetragen werden, um auf porösen oder ausgebrochenen Mauern genügend zu kleben. Zudem neigen sie dazu, mit der Alterung ihre Klebkraft zu verlieren. Haftkleber gemäß der Erfindung andererseits können nicht genügend dick/massig aufgetragen werden, um eine dauerhafte Endverklebung und somit Dichtigkeit auf porösem oder ausgebrochenem Mauerwerk zu garantieren. Sie dienen deshalb in der bevorzugten Ausführungsform als Hilfsmontage für den Verarbeiter, bis der Putz aufgetragen wird und durch die Perforation die dauerhafte Verbindung zum darunter liegenden Mauerwerk sicherstellt.

Erfindungsgemäß bevorzugt beträgt eine Dicke der Haftkleberbeschichtung und/oder der Haftkleberbeschichtungen bis zu 0,5 mm, bevorzugter ist die Dicke kleiner als 0,3 mm (Anspruch 28).

Die Verarbeitbarkeit des erfindungsgemäßen Bandes wird besonders erleichtert, falls das Band gemäß einer bevorzugten Ausführungsform so beschaffen ist, dass zumindest dessen Trägerschicht quer zur Längsrichtung des Bandes von Hand einreißbar ist (Anspruch 29). Bevorzugt kann auch die Abdeckfolie quer zur Längsrichtung des Bandes von Hand einreißbar sein. Somit kann ohne Werkzeugeinsatz ein Ablängen des Bandes bei der Verlegung auf einfache Art und Weise erfolgen.

Besonders leicht handhabbar ist das erfindungsgemäße selbstklebende Band gemäß einer bevorzugten Ausführungsform, bei welcher das Band in gefaltetem Zustand zu einer Klebeband-Rolle aufgerollt ist (Anspruch 30). Diese ist vor Ort während der Anwendung auch ohne zusätzlichen Dispenser besonders leicht handhabbar.

Gemäß einer bevorzugten Ausführungsform des erfindungsgemäßen Bandes ist mindestens an der Seite der ersten Faltungskante der Rolle eine Zwischenlage vorgesehen, durch welche gegebenenfalls ein Verkleben im Bereich der ersten Faltungskante vor der eigentlichen Anwendung des Bandes vermieden wird (Anspruch 31). Die Zwischenlage deckt im Bereich der ersten Faltungskante gegebenenfalls die dort freiliegende Haftkleberbeschichtung zuverlässig ab, so dass auch eine Schmutzansammlung bereits vor Anwendung des Bandes dort sicher vermieden wird. Die Verarbeitbarkeit des so vorteilhaft erfindungsgemäß gestalteten Bandes wird dadurch weiter verbessert.

Bevorzugt weist das erfindungsgemäße Band im nicht gefalteten Zustand und im Zustand mit nicht ausgezogener/ausgeklappter Dehnungsreserve (D) eine Breite von mindestens 3 cm auf, bevorzugter eine Breite im Bereich von 3 cm bis 50 cm, noch bevorzugter eine Breite im Bereich von 4 cm bis 30 cm und am meisten bevorzugt eine Breite im Bereich von 4,5 cm bis 20 cm (Anspruch 32). Diese Maße erlauben einerseits, auch etwas breitere Fugen sicher abzudichten, andererseits wird vermieden, dass durch übergroße Breite des erfindungsgemäßen Bandes dessen Handhabbarkeit erschwert wird und es somit zu Faltenbildung und damit zu Undichtheiten beim Verlegevorgang des erfindungsgemäßen Bandes kommt. Im Bedarfsfall kann dann durch Ausnutzung der Dehnungsreserve (D), welche Ihre Breite von 1 bis 20 cm (nicht ausgezogen/nicht ausgeklappt) im ausgezogenen/ausgeklappten Zustand z.B. verdoppeln oder verdrei- oder vervierfachen kann, eine dichtende Verarbeitung des erfindungsgemäßen Bandes auch bei in der Breite variierenden Fugen sicher und zuverlässig erfolgen.

Gemäß einer weiteren bevorzugten Ausführungsform der Erfindung kann zumindest eine Seite der Trägerschicht aus einem solchen, insbesondere offenporigen Material bestehen, welches eine gute Hafteigenschaft für Mauerputz aufweist (Anspruch 33). Die Haftwirkung des Bandes auf Putzuntergrund wird damit zusätzlich verbessert und ein Ablösen von Teilen des Mauerputzes vom so gestalteten Band wird sicher vermieden.

Gemäß einer weiteren bevorzugten Ausführungsform der Erfindung kann das Band in Querrichtung auf den zumindest einen Perforationsbereich folgend einen ersten diffusionsoffenen Bandabschnitt und einen zweiten diffusionsgeschlossenen Bandabschnitt aufweisen (Anspruch 34).

Gemäß einer weiteren bevorzugten Ausführungsform der Erfindung kann das Band in Querrichtung auf den zumindest einen Perforationsbereich folgend einen ersten diffusionsgeschlossenen Bandabschnitt und einen zweiten diffusionsoffenen Bandabschnitt aufweisen (Anspruch 35).

Das oben beschriebene erfindungsgemäße Band kann zum Verschließen, Abdichten und Verkleben von Fugen, insbesondere von Fugen in Ecken und Kanten, zwischen einem Rahmenbauteil, insbesondere einem Fensterrahmen oder einem Türrahmen, und Fassadenöffnungen oder Dachöffnungen beim Hausbau erfindungsgemäß Verwendung finden (Anspruch 36).

Die Erfindung wird im Folgenden anhand der in der Zeichnung beispielhaft beschriebenen Ausführungsformen der Erfindung detailliert beschrieben werden. Es zeigt:
- Fig. 1: eine erste Ausführungsform eines Bandes der Erfindung in einer Schnittansicht in Querrichtung des Bandes.
- Fig. 2: eine zweite bevorzugte Ausfizhrungsform des erfindungsgemäßen Bandes in Schnittansicht in Querrichtung des Bandes.

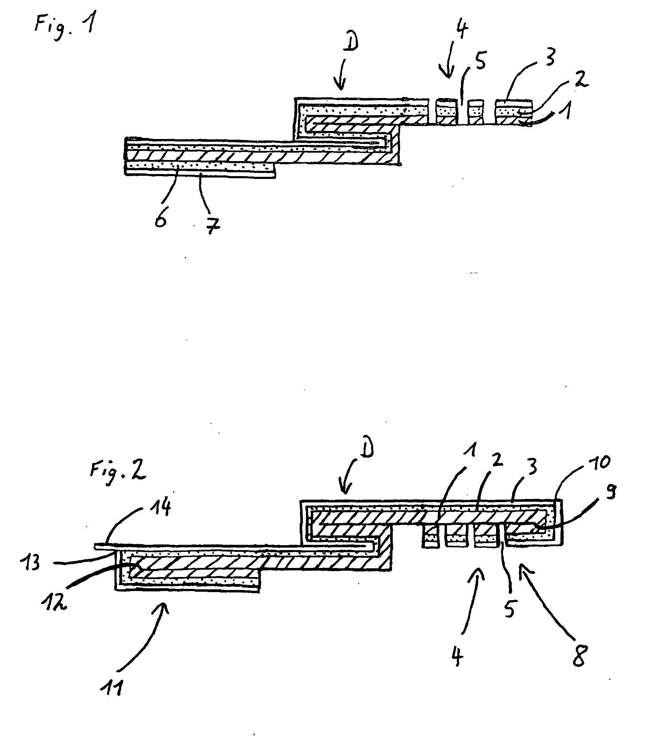

Generell sei angemerkt, dass die Darstellungen der Fig. 1 und 2 nicht maßstabsgerecht sind und lediglich schematisch den Aufbau und die Gestaltung von Ausführungsformen des erfindungsgemäßen Bandes zeigen. Insbesondere die Dickenverhältnisse der einzelnen Schichten sind nicht maßstabsgerecht wiedergegeben. Allgemein weist das erfindungsgemäße Band bevorzugt eine Breite im nicht gefalteten Zustand und mit einer nicht ausgeklappten/nicht ausgezogenen Dehnungsreserve (D) von mindestens 3 cm auf. Perforationsöffnungen haben einen durchschnittlichen Durchmesser von mindestens 3 mm.

Figur 1 zeigt eine erste bevorzugte Ausführungsform eines selbstklebenden Bandes gemäß der Erfindung in einer schematischen Schnittansicht entlang der Querrichtung des Bandes. Das erfindungsgemäße Band nach Fig. 1 weist eine Trägerschicht 1 an einer Bandoberseite, eine Haftkleberbeschichtung 2 der Trägerschicht 1 an der Bandunterseite und eine abziehbare Abdeckfolie 3 an der Bandunterseite auf. Die Bandunterseite ist in Figur 1 oben dargestellt, die Bandoberseite unten. Eine (weitere, zweite) Haftkleberbeschichtung 6 zumindest eines Teils der Trägerschicht 1 an der Bandoberseite ist mit einer abziehbaren Abdeckfolie 7 dieser Haftkleberbeschichtung 6 an der Bandoberseite vorgesehen. Das Band weist erfindungsgemäß einen Perforationsbereich 4 in einem Randbereich des Bandes auf, mit Perforationsöffnungen 5. Die Perforationsöffnungen 5 erstrecken sich durch die Trägerschicht 1, die Haftkleberbeschichtung 2 und die abziehbare Abdeckfolie 3. Ferner weist das Band erfindungsgemäß in Querrichtung des Bandes vom Perforationsbereich beabstandet eine ausklappbare/ausziehbare Dehnungsreserve (D) auf, welche in Querrichtung des Bandes gesehen im Wesentlichen mittig angeordnet ist und, wie hier gezeigt, als einfache Z-Faltung des Bandes ausgebildet ist. Es können auch mehrere Z-Faltungen des Bandes über- oder nebeneinander und/oder eine Plisseefaltung des Bandes als Dehnungsreserve (D) vorgesehen sein.

Figur 2 zeigt in einer schematischen Querschnittansicht entlang der Querrichtung des erfindungsgemäßen Bandes eine zweite Ausführungsform der Erfindung. In Fig. 2 bezeichnen gleiche Bezugszeichen gleiche Elemente der Erfindung. Die in Figur 2 dargestellte Ausführungsform der Erfindung entspricht im Wesentlichen der in Figur 1 dargestellten Ausführungsform der Erfindung, mit dem Unterschied, dass dort (in Fig. 2) keine Haftkleberbeschichtung 6 mit Abdeckschicht 7 an der Bandoberseite vorgesehen ist, und dass in der in Fig. 2 dargestellten Ausführungsform ein erster Faltabschnitt 8 des Bandes in Querrichtung entlang einer in Längsrichtung des Bandes verlaufenden ersten Faltungskante 9 umgefaltet ist und ein zweiter Faltabschnitt 11 des Bandes in Querrichtung entlang einer entlang einer in Längsrichtung des Bandes verlaufenden zweiten Faltungskante 12 umgefaltet ist. Ein erster Schlitz 10 der Abdeckfolie 3 ist in Längsrichtung des Bandes vorgesehen, wobei dieser erste Schlitz 10 nicht mit der ersten Faltungskante 9 zusammenfällt. Ein zweiter Schlitz 13 der Abdeckfolie 3 ist in Längsrichtung des Bandes vorgesehen, wobei dieser zweite Schlitz 13 nicht mit der zweiten Faltungskante 12 zusammenfällt Ein Randabschnitt 14 der Abdeckfolie 3 steht über die zweite Faltungskante 12 vor und dient damit als Angreifabschnitt zum Abziehen der Abdeckfolie 3.

Gemäß der in Fig. 2 dargestellten Ausführungsform ist das erfindungsgemäße Band so auf sich selbst gefaltet, dass der erste Faltabschnitt 8 dem Perforationsbereich 4 entspricht.

## Patentansprüche

1. Selbstklebendes Band zum Verschließen, Abdichten und Verkleben von Fugen, insbesondere im Hausbau, und insbesondere von Fugen in Ecken und Kanten, mit einer Trägerschicht (1) an der Bandoberseite, einer Haftkleberbeschichtung (2) zumindest eines Teils der Trägerschicht (1) an der Bandunterseite und mit einer abziehbaren Abdeckfolie (3) der Haftkleberbeschichtung (2) an der Bandunterseite, **dadurch gekennzeichnet, dass** das Band zumindest in einem Randbereich zumindest einen Perforationsbereich (4), wo zumindest die Trägerschicht (1) perforiert ist, aufweist, und dass das Band zumindest eine Dehnungsreserve (D) aufweist, welche in Querrichtung des Bandes vom Perforationsbereich (4) beabstandet ist.

2. Band nach Anspruch 1 **dadurch gekennzeichnet, dass** die Dehnungsreserve (D) in Querrichtung des Bandes gesehen im wesentlichen mittig angeordnet ist.

3. Band nach einem der Ansprüche 1 oder 2, **dadurch gekennzeichnet, dass** die Dehnungsreserve (D) zumindest eine Z-Faltung des Bandes, bevorzugt eine Plisseefaltung des Bandes ist.

4. Band nach einem der vorherigen Ansprüche, **dadurch gekennzeichnet, dass** der Perforationsbereich (4) des Bandes Perforationsöffnungen (5) mit einem durchschnittlichen Durchmesser von mindestens 3 Millimetern aufweist.

5. Band nach Anspruch 4, **dadurch gekennzeichnet, dass** die Perforationsöffnungen (5) durch die Trägerschicht (1), die Haftklebeberbeschichtung (2) und die abziehbare Abdeckfolie (3) gehen.

6. Band nach Anspruch 4 oder 5, **dadurch gekennzeichnet, dass** die Perforationsöffnungen (5) im Wesentlichen rund, eckig oder oval sind.

7. Band nach einem der vorherigen Ansprüche, **dadurch gekennzeichnet, dass** eine Haftkleberbeschichtung (6) zumindest eines Teils der Trägerschicht (1) an der Bandoberseite vorgesehen ist, bevorzugt mit einer abziehbaren Abdeckfolie (7) der Haftkleberbeschichtung (6) an der Bandoberseite.

8. Band nach Anspruch 7, **dadurch gekennzeichnet, dass** die Haftkleberbeschichtung (6) zumindest eines Teils der Trägerschicht (1) an der Bandoberseite im Perforationsbereich (4) vorgesehen ist.

9. Band nach Anspruch 7 oder 8, **dadurch gekennzeichnet, dass** die Perforationsöffnungen (5) durch die Trägerschicht (1), die Haftkleberbeschichtung (6) zumindest eines Teils der Trägerschicht (1) an der Bandoberseite und die abziehbare Abdeckfolie (7) gehen.

10. Band nach einem der vorherigen Ansprüche, **dadurch gekennzeichnet, dass** zumindest ein Mittenabschnitt des Bandes nichtklebend ausgebildet ist, bevorzugt ohne Haftkleberbeschichtung (2) und/oder Haftkleberbeschichtung (6).

11. Band nach einem der vorherigen Ansprüche, **dadurch gekennzeichnet, dass** zumindest ein erster Faltabschnitt (8) des Bandes in Querrichtung entlang einer in Längsrichtung des Bandes verlaufenden ersten Faltungskante (9) umgefaltet ist, wobei bevorzugt die Abdeckfolie (3) zumindest einen ersten Schlitz (10) aufweist, wobei bevorzugter die erste Faltungskante (9) an einer anderen Stelle als der erste Schlitz (10) verläuft.

12. Band nach Anspruch 11, **dadurch gekennzeichnet, dass** der erste Faltabschnitt (8) der Perforationsbereich (4) ist.

13. Band nach Anspruch 11, **dadurch gekennzeichnet, dass** der erste Faltabschnitt (8) der dem Perforationsbereich (4) gegenüberliegende Abschnitt ist.

14. Band nach einem der vorherigen Ansprüche, **dadurch gekennzeichnet, dass** das Band einen zweiten Faltungsabschnitt (11) aufweist, welcher in Querrichtung entlang einer in Längsrichtung des Bandes verlaufenden zweiten Faltungskante (12) umgefaltet ist.

15. Band nach einem der vorherigen Ansprüche, **dadurch gekennzeichnet, dass** die Abdeckfolie (3) zumindest einen zweiten Schlitz (13) in Längsrichtung des Bandes aufweist.

16. Band nach Anspruch 14 und 15, **dadurch gekennzeichnet, dass,** die zweite Faltungskante (12) mit dem zweiten Schlitz (13) der Abdeckfolie (3) zusammenfällt.

17. Band nach Anspruch 14 und 15, **dadurch gekennzeichnet, dass,** die zweite Faltungskante (12) nicht mit dem ersten Schlitz (10) und/oder dem zweiten Schlitz (13) der Abdeckfolie (3) zusammenfällt.

18. Band nach Anspruch 15, **dadurch gekennzeichnet, dass,** die erste Faltungskante (9) nicht mit dem zweiten Schlitz (13) der Abdeckfolie (3) zusammenfällt.

19. Band nach einem der vorherigen Ansprüche oder nach einem der Ansprüche 2 bis 6, **dadurch gekennzeichnet, dass** ein Randabschnitt (14) der Abdeckfolie (3) über die erste Faltungskante (9) und/oder die zweite Faltungskante (12) vorsteht.

20. Band nach einem der Ansprüche 13 bis 15, **dadurch gekennzeichnet, dass** der erste Faltabschnitt (8) und der zweite Faltabschnitt (11) jeweils gegenüberliegende Randabschnitte des Bandes sind.

21. Band nach einem der Ansprüche 14 bis 20, **dadurch gekennzeichnet, dass** der erste Faltabschnitt (8) und der zweite Faltabschnitt (11) in Querrichtung des Bandes gesehen aneinander angrenzen.

22. Band nach einem der Ansprüche 14 bis 21, **dadurch gekennzeichnet, dass** der erste Faltabschnitt (8) und der zweite Faltabschnitt (11) zumindest teilweise aufeinanderliegen.

23. Band nach einem der Ansprüche 12 bis 22 oder nach einem der Ansprüche 15 bis 23, **dadurch gekennzeichnet, dass** im Bereich des ersten Faltabschnitts (8) und/oder des zweiten Faltabschnitts (11) Bandunterseite auf Bandunterseite aufeinanderliegt.

24. Band nach einem der Ansprüche 12 bis 22 oder nach einem der Ansprüche 15 bis 23, **dadurch gekennzeichnet, dass** im Bereich des ersten Faltabschnitts (8) und/oder des zweiten Faltabschnitts (11) Bandoberseite auf Bandoberseite aufeinanderliegt.

25. Band nach einem der vorherigen Ansprüche, **dadurch gekennzeichnet, dass** mindestens ein Teil der Haftkleberbeschichtung (2) nicht mit der Abdeckfolie (3) abgedeckt ist.

26. Band nach Anspruch 25, **dadurch gekennzeichnet, dass** die Haftkleberbeschichtung (2) zumindest im Bereich des ersten Faltungsabschnitts (8) und/oder des zweiten Faltabschnitts (11) nicht mit der Abdeckfolie (3) abgedeckt ist.

27. Band nach einem der vorherigen Ansprüche, **dadurch gekennzeichnet, dass** die Trägerschicht (1) aus einem Material aus der Gruppe Papier, Kunststoff, Gewebe, Flies oder einer Kombination zumindest zweier dieser Materialien besteht und/oder die Haftkleberbeschichtung (2) und/oder die Haftkleberbeschichtung (6) aus der Gruppe selbstklebender Acrylatkleber, Kautschukkleber, Buthylkleber, Hotmelt oder eine Kombination zumindest zweier dieser Kleber ist.

28. Band nach einem der vorherigen Ansprüche, **dadurch gekennzeichnet, dass** eine Dicke der Haftkleberbeschichtung (2) und/oder der Haftkleberbeschichtung (6) bis zu 0,5 mm beträgt, bevorzugt die Dicke kleiner als 0,3 mm ist.

29. Band nach einem der vorherigen Ansprüche, **dadurch gekennzeichnet, dass** zumindest die Trägerschicht (1) so beschaffen ist, dass sie quer zur Längsrichtung des Bandes von Hand reißbar ist.

30. Band nach einem der vorherigen Ansprüche, **dadurch gekennzeichnet, dass** es in gefaltetem Zustand zu einer Klebeband-Rolle aufgerollt ist.

31. Band nach Anspruch 30, **dadurch gekennzeichnet, dass** mindestens an der Seite der ersten Faltungskante (9) der Rolle eine Zwischenlage vorgesehen ist.

32. Band nach einem der vorherigen Ansprüche, **dadurch gekennzeichnet, dass** es in nicht gefaltetem Zustand und mit nicht ausgezogener/ausgeklappter Dehnungsreserve mindestens 3 cm breit ist, bevorzugter eine Breite im Bereich von 3 cm bis 50 cm, noch bevorzugter eine Breite im Bereich von 4 cm bis 30 cm und am meisten bevorzugt eine Breite im Bereich von 4,5 cm bis 20 cm aufweist.

33. Band nach einem der vorherigen Ansprüche, **dadurch gekennzeichnet, dass** zumindest eine Seite der Trägerschicht (1) aus einem solchen, insbesondere offenporigen, Material besteht, welches eine gute Hafteigenschaft für Mauerputz aufweist.

34. Band nach einem der Ansprüche 1 bis 33, **dadurch gekennzeichnet, dass** das Band in Querrichtung auf den zumindest einen Perforationsbereich (4) folgend einen ersten diffusionsoffenen Bandabschnitt und einen zweiten diffusionsgeschlossenen Bandabschnitt aufweist.

35. Band nach einem der Ansprüche 1 bis 33, **dadurch gekennzeichnet, dass** das Band in Querrichtung auf den zumindest einen Perforationsbereich (4) folgend einen ersten diffusionsgeschlossenen Bandabschnitt und einen zweiten diffusionsoffenen Bandabschnitt aufweist.

36. Verwendung eines Bandes mit den Merkmalen gemäß zumindest einem der Ansprüche 1 bis 36, zum Verschließen, Abdichten und Verkleben von Fugen, insbesondere von Fugen in Ecken und Kanten, zwischen einem Rahmenbauteil, insbesondere einem Fensterrahmen oder einem Türrahmen, und Fassadenöffnungen oder Dachöffnungen beim Hausbau.

## Claims

1. Self-adhesive tape for closing, sealing and adhering joints, more especially for use in house-building, and more especially joints in corners and edges, said tape having a carrier layer (1) on its upper side, a contact adhesive coating (2) of at least a portion of the carrier layer (1) on its underside and a removable covering film (3) of the contact adhesive coating (2) on its underside, **characterised in that,** in at least one edge region, the tape has at least one perforation region (4), where at least the carrier layer (1) is perforated, and **in that** the tape has at least one expansion reserve (D) which is spaced from the perforation region (4) in the transverse direction of the tape,

2. Tape according to claim 1, **characterised in that** the expansion reserve (D) is disposed substantially centrally when viewed with respect to the transverse direction of the tape.

3. Tape according to one of claims 1 or 2, **characterised in that** the expansion reserve (D) is at least one Z-shaped fold of the tape, preferably one pleat-like fold of the tape.

4. Tape according to one of the previous claims, **characterised in that** the perforation region (4) of the tape has perforation openings (5) with a mean diameter of at least 3 millimetres.

5. Tape according to claim 4, **characterised in that** the perforation openings (5) go through the carrier layer (1), the contact adhesive coating (2) and the removable covering film (3).

6. Tape according to claim 4 or 5, **characterised in that** the perforation openings (5) are substantially round, angular or oval.

7. Tape according to one of the previous claims, **characterised in that** a contact adhesive coating (6) of at least a portion of the carrier layer (1) is provided on the upper side of the tape, preferably with a removable covering film (7) of the contact adhesive coating (6) on the upper side of the tape.

8. Tape according to claim 7, **characterised in that** the contact adhesive coating (6) of at least a portion of the carrier layer (1) is provided on the upper side of the tape in the perforation region (4).

9. Tape according to claim 7 or 8, **characterised in that** the perforation openings (5) go through the carrier layer (1), through the contact adhesive coating (6) of at least a portion of the carrier layer (1) on the upper side of the tape and through the removable covering film (7).

10. Tape according to one of the previous claims, **characterised in that** at least a central portion of the tape is non-adhesive, preferably without contact adhesive coating (2) and/or contact adhesive coating (6).

11. Tape according to one of the previous claims, **characterised in that** at least a first fold portion (8) of the tape is folded-over in the transverse direction along a first folding edge (9), which extends in the longitudinal direction of the tape, preferably the covering film (3) having at least a first slit (10), and more preferably the first folding edge (9) extending as the first slit (10) at a different location.

12. Tape according to claim 11, **characterised in that** the first fold portion (8) is the perforation region (4).

13. Tape according to claim 11, **characterised in that** the first fold portion (8) is the portion situated opposite the perforation region (4).

14. Tape according to one of the previous claims, **characterised in that** the tape has a second fold portion (11), which is folded-over in the transverse direction along a second folding edge (12) extending in the longitudinal direction of the tape.

15. Tape according to one of the previous claims, **characterised in that** the covering film (3) has at least a second slit (13) in the longitudinal direction of the tape.

16. Tape according to claims 14 and 15, **characterised in that** the second folding edge (12) coincides with the second slit (13) of the covering film (3).

17. Tape according to claims 14 and 15, **characterised in that** the second folding edge (12) does not coincide with the first slit (10) and/or with the second slit (13) of the covering film (3).

18. Tape according to claim 15, **characterised in that** the first folding edge (9) does not coincide with the second slit (13) of the covering film (3).

19. Tape according to one of the previous claims or according to one of claims 2 to 6, **characterised in that** an edge portion (14) of the covering film (3) protrudes beyond the first folding edge (9) and/or beyond the second folding edge (12).

20. Tape according to one of claims 13 to 15, **characterised in that** the first fold portion (8) and the second fold portion (11) are respectively oppositely situated edge portions of the tape.

21. Tape according to one of claims 14 to 20, **characterised in that** the first fold portion (8) and the second fold portion (11) are adjacent each other when viewed with respect to the transverse direction of the tape.

22. Tape according to one of claims 14 to 21, **characterised in that** the first fold portion (8) and the second fold portion (11) lie at least partially on each other.

23. Tape according to one of claims 12 to 22 or according to one of claims 15 to 23, **characterised in that,** in the region of the first fold portion (8) and/or of the second fold portion (11), one tape underside lies on the other tape underside.

24. Tape according to one of claims 12 to 22 or according to one of claims 15 to 23, **characterised in that,** in the region of the first fold portion (8) and/or of the second fold portion (11), one tape upper side lies on the other tape upper side.

25. Tape according to one of the previous claims, **characterised in that** at least a portion of the contact adhesive coating (2) is not covered with the covering film (3).

26. Tape according to claim 25, **characterised in that** the contact adhesive coating (2), at least in the region of the first fold portion (8) and/or of the second fold portion (11), is not covered with the covering film (3).

27. Tape according to one of the previous claims, **characterised in that** the carrier layer (1) consists of a material selected from the group comprising paper, plastics material, cloth, non-woven fabric or a combination of at least two of these materials, and/or the contact adhesive coating (2) and/or the contact adhesive coating (6) are/is selected from the group comprising self-adhesive acrylate adhesives, rubber adhesives, butyl adhesives, hot-melt adhesives or a combination of at least two of these adhesives.

28. Tape according to one of the previous claims, **characterised in that** one thickness of the contact adhesive coating (2) and/or of the contact adhesive coating (6) is up to 0.5 mm, and preferably the thickness is less than 0.3 mm.

29. Tape according to one of the previous claims, **characterised in that** at least the carrier layer (1) is produced so that it can be torn by hand transversely relative to the longitudinal direction of the tape.

30. Tape according to one of the previous claims, **characterised in that** it is rolled-up in the folded state to form a roll of adhesive tape.

31. Tape according to claim 30, **characterised in that** an intermediate layer is provided on at least the side of the first folding edge (9) of the roll.

32. Tape according to one of the previous claims, **characterised in that** it is at least 3 cm wide in the non-folded state and with a non-extended/folded-out expansion reserve; more preferably it has a width in the range of between 3 cm and 50 cm, even more preferably a width in the range of between 4 cm and 30 cm, and most preferably a width in the range of between 4.5 cm and 20 cm.

33. Tape according to one of the previous claims, **characterised in that** at least one side of the carrier layer (1) consists of a material, more especially an open-pored material, which has a good adhesive property for plaster.

34. Tape according to one of claims 1 to 33, **characterised in that,** following on from the at least one perforation region (4) in the transverse direction, the tape has a first diffusion-open tape portion and a second diffusion-closed tape portion.

35. Tape according to one of claims 1 to 33, **characterised in that,** following on from the at least one perforation region (4) in the transverse direction, the tape has a first diffusion-closed tape portion and a second diffusion-open tape portion.

36. Use of a tape having the features according to at least one of claims 1 to 35, for closing, sealing and adhering joints, more especially joints in corners and edges, between a frame component part, more especially a window frame or a door frame, and façade openings or roof openings for house-building purposes.

## Revendications

1. Ruban autocollant pour obturer, étancher et coller des joints, en particulier dans le secteur du bâtiment, et en particulier des joints d'angle et d'arête, avec une couche porteuse (1) sur la face supérieure du ruban, un revêtement adhésif de contact (2) d'au moins une partie de la couche porteuse (1) sur la sous-face du ruban et avec un film de protection détachable (3) du revêtement adhésif de contact (2) sur la sous-face du ruban, **caractérisé en ce que** le ruban comporte, au moins dans une zone de bord, au moins une zone de perforation (4) où au moins la couche porteuse (1) est perforée, et **en ce que** le ruban comporte au moins une réserve d'extension (D), laquelle est distante de la zone de perforation (4) dans la direction transversale du ruban.

2. Ruban selon la revendication 1, **caractérisé en ce que** la réserve d'extension (D) est disposée de manière sensiblement centrée par rapport à la direction transversale du ruban.

3. Ruban selon l'une des revendications 1 ou 2, **caractérisé en ce que** la réserve d'extension (D) est au moins un pliage en Z du ruban, de préférence un pliage plissé du ruban.

4. Ruban selon l'une des revendications précédentes, **caractérisé en ce que** la zone de perforation (4) du ruban comporte des ouvertures de perforation (5) d'un diamètre moyen d'au moins 3 millimètres.

5. Ruban selon la revendication 4, **caractérisé en ce que** les ouvertures de perforation (5) traversent la couche porteuse (1), le revêtement adhésif de contact (2) et le film de protection détachable (3).

6. Ruban selon la revendication 4 ou 5, **caractérisé en ce que** les ouvertures de perforation (5) sont sensiblement circulaires, polygonales ou ovales.

7. Ruban selon l'une des revendications précédentes, **caractérisé en ce qu'**un revêtement adhésif de contact (6) d'au moins une partie de la couche porteuse (1) est prévu sur la face supérieure du ruban, de préférence avec un film de protection détachable (7) du revêtement adhésif de contact (6) sur la face supérieure du ruban.

8. Ruban selon la revendication 7, **caractérisé en ce que** le revêtement adhésif de contact (6) d'au moins une partie de la couche porteuse (1) sur la face supérieure du ruban est prévu dans la zone de perforation (4).

9. Ruban selon la revendication 7 ou 8, **caractérisé en ce que** les ouvertures de perforation (5) traversent la couche porteuse (1), le revêtement adhésif de contact (6) d'au moins une partie de la couche porteuse (1) sur la face supérieure du ruban et le film de protection détachable (7).

10. Ruban selon l'une des revendications précédentes, **caractérisé en ce qu'**au moins une portion centrale du ruban est conçue de manière non adhésive, de préférence sans revêtement adhésif de contact (2) et/ou sans revêtement adhésif de contact (6).

11. Ruban selon l'une des revendications précédentes, **caractérisé en ce qu'**au moins une première portion pliée (8) du ruban est repliée en direction transversale le long d'un premier bord de pliage (9) s'étendant dans la direction longitudinale du ruban, le film de protection (3) comportant de préférence au moins une première fente (10), le premier bord de pliage (9) s'étendant de préférence à un autre endroit que la première fente (10).

12. Ruban selon la revendication 11, **caractérisé en ce que** la première portion pliée (8) est la zone de perforation (4).

13. Ruban selon la revendication 11, **caractérisé en ce que** la première portion pliée (8) est la portion située en vis-à-vis de la zone de perforation (4).

14. Ruban selon l'une des revendications précédentes, **caractérisé en ce que** le ruban comporte une seconde portion pliée (11), laquelle est repliée en direction transversale le long d'un deuxième bord de pliage (12) s'étendant dans la direction longitudinale du ruban.

15. Ruban selon l'une des revendications précédentes, **caractérisé en ce que** le film de protection (3) comporte au moins une deuxième fente (13) dans la direction longitudinale du ruban.

16. Ruban selon les revendications 14 et 15, **caractérisé en ce que** le deuxième bord de pliage (12) coïncide avec la deuxième fente (13) du film de protection (3).

17. Ruban selon les revendications 14 et 15, **caractérisé en ce que** le deuxième bord de pliage (12) ne coïncide pas avec la première fente (10) et/ou la deuxième fente (13) du film de protection (3).

18. Ruban selon la revendication 15, **caractérisé en ce que** le premier bord de pliage (9) ne coïncide pas avec la deuxième fente (13) du film de protection (3).

19. Ruban selon l'une des revendications précédentes ou selon l'une des revendications 2 à 6, **caractérisé en ce qu'**une portion de bord (14) du film de protection (3) déborde du premier bord de pliage (9) et/ou du deuxième bord de pliage (12).

20. Ruban selon l'une des revendications 13 à 15, **caractérisé en ce que** la première portion pliée (8) et la seconde portion pliée (11) sont des portions de bord opposées du ruban.

21. Ruban selon l'une des revendications 14 à 20, **caractérisé en ce que** la première portion pliée (8) et la seconde portion pliée (11) sont adjacentes l'une à l'autre par rapport à la direction transversale du ruban.

22. Ruban selon l'une des revendications 14 à 21, **caractérisé en ce que** la première portion pliée (8) et la seconde portion pliée (11) sont au moins partiellement superposées.

23. Ruban selon l'une des revendications 12 à 22 ou selon l'une des revendications 15 à 23, **caractérisé en ce que,** dans la zone de la première portion pliée (8) et/ou de la seconde portion pliée (11), les sous-faces de ruban reposent l'un sur l'autre.

24. Ruban selon l'une des revendications 12 à 22 ou selon l'une des revendications 15 à 23, **caractérisé en ce que,** dans la zone de la première portion pliée (8) et/ou de la seconde portion pliée (11), les faces supérieures du ruban reposent l'une sur l'autre.

25. Ruban selon l'une des revendications précédentes, **caractérisé en ce qu'**au moins une partie du revêtement adhésif de contact (2) n'est pas recouverte par le film de protection (3).

26. Ruban selon la revendication 25, **caractérisé en ce que** le revêtement adhésif de contact (2) n'est pas recouvert par le film de protection (3) au moins dans la zone de la première portion pliée (8) et/ou de la seconde portion pliée (11).

27. Ruban selon l'une des revendications précédentes, **caractérisé en ce que** la couche porteuse (1) est constituée d'un matériau provenant du groupe comprenant papier, matière plastique, tissu, non-tissé ou d'une combinaison d'au moins deux de ces matériaux et/ou le revêtement adhésif de contact (2) et/ou le revêtement adhésif de contact (6) est constitué d'un matériau provenant du groupe comprenant adhésif acrylate autocollant, adhésif au caoutchouc, adhésif au butyle, adhésif thermofusible ou est une combinaison d'au moins deux de ces adhésifs.

28. Ruban selon l'une des revendications précédentes, **caractérisé en ce qu'**une épaisseur du revêtement adhésif de contact (2) et/ou du revêtement adhésif de contact (6) peut atteindre 0,5 mm, l'épaisseur étant de préférence inférieure à 0,3 mm.

29. Ruban selon l'une des revendications précédentes, **caractérisé en ce qu'**au moins la couche porteuse (1) est conçue de manière à pouvoir être arrachée manuellement transversalement à la direction longitudinale du ruban.

30. Ruban selon l'une des revendications précédentes, **caractérisé en ce qu'**à l'état plié, il est enroulé sous la forme d'un rouleau de ruban adhésif.

31. Ruban selon la revendication 30, **caractérisé en ce qu'**une couche intermédiaire est prévue au moins sur le côté du premier bord de pliage (9) du rouleau.

32. Ruban selon l'une des revendications précédentes, **caractérisé en ce que,** à l'état non plié et avec la réserve d'extension non déployée/dépliée, il est large d'au moins 3 cm, présente préférentiellement une largeur comprise entre 3 cm et 50 cm, plus préférentiellement une largeur comprise entre 4 cm et 30 cm et, le plus préférentiellement, une largeur comprise entre 4,5 cm et 20 cm.

33. Ruban selon l'une des revendications précédentes, **caractérisé en ce qu'**au moins une face de la couche porteuse (1) est composée d'un matériau, en particulier à pores ouverts, qui présente une bonne adhérence sur l'enduit mural.

34. Ruban selon l'une des revendications 1 à 33, **caractérisé en ce que** le ruban comporte en direction transversale, à la suite de ladite au moins une zone de perforation (4), une première portion de ruban ouverte à la diffusion et une seconde portion de ruban fermée à la diffusion.

35. Ruban selon l'une des revendications 1 à 33, **caractérisé en ce que** le ruban comporte en direction transversale, à la suite de ladite au moins une zone de perforation (4), une première portion de ruban fermée à la diffusion et une seconde portion de ruban ouverte à la diffusion.

36. Utilisation d'un ruban possédant les caractéristiques selon au moins une des revendications 1 à 36, pour obturer, étancher et coller des joints, en particulier des joints d'angle et d'arête, entre un élément de construction formant cadre, en particulier un cadre de fenêtre ou un cadre de porte, et des ouvertures de façade ou des ouvertures de toit dans le secteur du bâtiment.
